# EUROPEAN PATENT SPECIFICATION

(11) **EP 4 546 838 B1**
(45) Date of publication and mention of the grant of the patent: **28.10.2026**
(21) Application number: 22948247.6
(22) Date of filing: 27.06.2022
(51) Int. Cl.: H04W 12/041, H04L 9/08, H04L 9/14

(54) **KEY GENERATION METHOD AND APPARATUS, COMMUNICATION DEVICE, AND STORAGE MEDIUM**
SCHLÜSSELERZEUGUNGSVERFAHREN UND -VORRICHTUNG, KOMMUNIKATIONSVORRICHTUNG UND SPEICHERMEDIUM
PROCÉDÉ ET APPAREIL DE GÉNÉRATION DE CLÉS, DISPOSITIF DE COMMUNICATION, ET SUPPORT DE STOCKAGE

(43) Date of publication of application: 30.04.2025
(73) Proprietor: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2022/101668
(87) International publication number: WO 2024/000123

(56) References cited:
- EP-A1- 3 768 017
- WO-A1-2017/065930
- WO-A1-2022/019627
- CN-A- 102 932 784
- CN-A- 103 096 308
- CN-A- 107 786 328
- CN-A- 110 830 991
- CN-A- 113 518 348
- US-A1- 2017 111 339
- US-A1- 2018 063 135
- US-A1- 2020 221 298
- "3rd Generation Partnership Project; Technical Specification Group Services and System Aspects; Study on security aspects for LTE support of V2X services (Release 14)", 3GPP STANDARD ; TECHNICAL REPORT ; 3GPP TR 33.885, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V1.2.0, 16 June 2017 (2017-06-16), Mobile Competence Centre ; 650, route des Lucioles ; F-06921 Sophia-Antipolis Cedex ; France , pages 1 - 87, XP051298756
- "3rd Generation Partnership Project; Technical Specification Group Services and System Aspects; Study on security aspects of enhancement for proximity based services in the 5G System (5GS) (Release 17)", 3GPP STANDARD; TECHNICAL REPORT; 3GPP TR 33.847, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.3.0, 2 December 2020 (2020-12-02), Mobile Competence Centre ; 650, route des Lucioles ; F-06921 Sophia-Antipolis Cedex ; France , pages 1 - 73, XP051999406

## Description

### TECHNICAL FIELD

The invention relates to, but not limited to, the field of wireless communication technologies, in particular to a method and an apparatus for generating a key, and a storage medium.

### BACKGROUND

With the development of technologies, a sidelink (SL) based on a PC5 interface can carry out multiple types of services. Furthermore, an SR5 interface is proposed based on the PC5 interface.

For example, a service based on the SL may include a proximity based service (ProSe), and a vehicle to everything (V2X) service. In addition, the service based on the SL may also include a ranging/sidelink positioning service, and so on.

In order to ensure the security of the service based on the SL, a key negotiation is usually performed before an actual transmission of service data, and then a communication of the service data is performed according to the negotiated key.

US 2018/063135 A1 discloses a method for performing authentication of a User Equipment (UE) for individual services in a wireless communication system, which is performed by a first network node providing a common control function, comprises receiving from a RAN (Radio Access Network) node a first message with respect to the UE's request to connect to a core network; and transmitting a second message for requesting authentication of the UE's connection request to a specific second network node on the basis of an indicator included in the first message.

### SUMMARY

Embodiments of the invention provide a method and an apparatus for generating a key, a communication device and a storage medium.

According to a first aspect of embodiments of the invention, there is provided a method for generating a key. The method is performed by a first user equipment (UE), and includes: generating a target-service root key of a target service in a second service type according to a key identifier of a first-service root key of a first service type and a service code of the target service in the second service type.

According to a second aspect of embodiments of the invention, there is provided a first user equipment, UE. The first UE includes: a generating module, configured to generate a target-service root key of a target service in a second service type according to a key identifier of a first-service root key of a first service type and a service code of the target service in the second service type.

According to a third aspect of embodiments of the invention, there is provided a computer-readable storage medium storing an executable program. When the executable program is executed by a processor of a first UE, the first UE is caused to implement the method according to any one of technical solutions in the first aspect.

According to the technical solution in embodiments of the invention, the first UE generates the root key of the target service in the second service type according to the key identifier of the root key of the first service type. In this way, it is realized that the root key of the first service type and the root key of the target service in the second service type are set separately, and root keys of different services in the second service type are isolated, and thus realizing a security isolation of the first service type and the target service in the second service type and a security isolation of different services in the second service type, which further improves the security of performing related services based on the SL.

It should be understood that the above general description and the detailed descriptions following are only illustrative and explanatory, and do not limit embodiments of the invention.

### BRIEF DESCRIPTION OF THE DRAWINGS

The accompanying drawings, which are incorporated in and constitute a part of the invention, illustrate embodiments consistent with the invention and, together with the description, serve to explain the principles of the invention.
FIG. 1 is a schematic diagram of a wireless communication system according to an embodiment of the disclosure.
FIG. 2A is a flowchart of a method for generating a key according to an embodiment of the disclosure.
FIG. 2B is a flowchart of a method for generating a key according to an embodiment of the disclosure.
FIG. 3 is a flowchart of a method for generating a key according to an embodiment of the disclosure.
FIG. 4 is a schematic diagram of an architecture of a key hierarchy according to an embodiment of the disclosure.
FIG. 5 is a schematic diagram of a hierarchical communication between UEs according to an embodiment of the disclosure.
FIG. 6 is a schematic diagram of a hierarchy of a service according to an embodiment of the disclosure.
FIG. 7 is a flowchart of a method for generating a key according to an embodiment of the disclosure.
FIG. 8 is a block diagram of an apparatus for generating a key according to an embodiment of the disclosure.
FIG. 9 is a block diagram of a UE according to an embodiment of the disclosure.
FIG. 10 is a block diagram of a communication device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. Implementations set forth in the following description of exemplary embodiments do not represent all implementations consistent with the invention. Instead, they are merely examples of apparatuses and methods consistent with some aspects of embodiments of the invention.

The terms used in the embodiments of the invention are solely for the purpose of describing a particular embodiment and are not intended to limit the embodiments of the invention. The terms "a", "an", and "the" in the singular form used in the embodiments and claims of the invention are also intended to include the plural form, unless the context clearly indicates other meaning. It should also be understood that the term "and/or" as used herein refers to any or all possible combinations of one or more associated listed items.

It should be understood that although the terms "first", "second", "third", etc. may be used to describe various information in the embodiments of the invention, such information should not be limited to these terms. These terms are used only to distinguish information in the same type from one another. For example, without leaving the scope of the embodiments of the invention, first information may also be referred to as second information, and likewise second information may be referred to as first information. Depending on the context, the word "if" used here may be interpreted as "when", "while", or "in response to determining that".

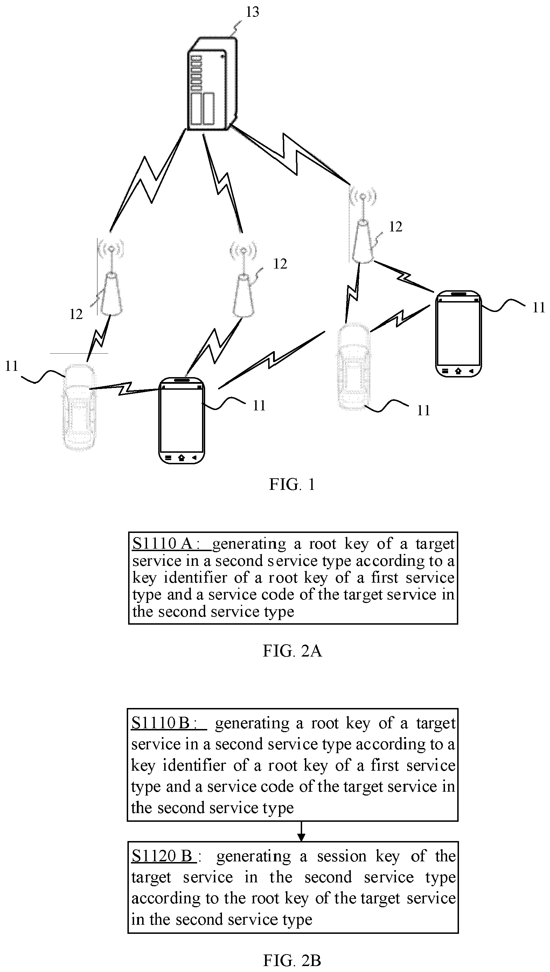

Referring to FIG. 1, which is a schematic diagram of a wireless communication system according to an embodiment of the disclosure. As shown in FIG. 1, the wireless communication system is a communication system based on cellular mobile communication technologies, and the wireless communication system may include: several user equipments (UEs) 11 and several access devices 12.

A UE 11 may be a device that provides voice and/or data connectivity to a user. The UE 11 may communicate with one or more core networks via a radio access network (RAN). The UE 11 may be an Internet of Things (IoT) UE, such as a sensor device, a mobile phone (or a "cellular" phone), and a computer with an IoT UE. For example, it may be a fixed, portable, pocket, handheld, computer built-in or vehicle-mounted device. For example, it may be a station (STA), a subscriber unit, a subscriber station, a mobile station, a mobile, a remote station, an access point, a remote terminal, an access terminal, a user terminal, a user agent, a user device, or a UE. Alternatively, the UE 11 may be a device for an unmanned aerial vehicle (UAV). Alternatively, the UE 11 may also be an on-board device. For example, it may be an electronic control unit (ECU) with a wireless communication function, or a wireless communication device of an external ECU. Alternatively, the UE 11 may be a roadside equipment, such as a street lamp, a signal lamp or other roadside devices with a wireless communication function.

The access device 12 may be a network-side device in the wireless communication system. The wireless communication system may be a 4th generation mobile communication technology (4G) system, also known as a Long Term Evolution (LTE) system; or, the wireless communication system may also be a 5th generation mobile communication technology (5G) system, also known as a new radio (NR) system or a 5G NR system; or, the wireless communication system may also be a system beyond the 5G system. An access network in the 5G system may be called a new generation-radio access network (NG-RAN) or a MTC system.

The access device 12 may be an evolved Node B (eNB) in the 4G system, or a next generation node B (gNB) that adopts a centralized distributed architecture in the 5G system. When the access device 12 adopts a centralized distributed architecture, the access device 12 usually includes a central unit (CU) and at least two distributed units (DUs). The CU is provided with a protocol stack of a packet data convergence protocol (PDCP) layer, a radio link control (RLC) layer, and a media access control (MAC) layer. The DU is provided with a protocol stack of a physical (PHY) layer. The specific implementation of the access device 12 is not limited in the embodiments of the invention.

A wireless connection may be established between the access device 12 and the UE 11 via a wireless air interface. In different implementations, the wireless air interface may be a wireless air interface based on a 4G standard; or, the wireless air interface may be a wireless air interface based on a 5G standard, for example, the wireless air interface may be the new radio; or the wireless air interface may also be a wireless air interface based on a next generation of a mobile communication network technology standard based on 5G.

As shown in FIG. 2A, an embodiment of the invention provides a method for generating a key. The method is performed by a first UE, and includes S1110A.

At S1110A, a target-service root key of a target service in a second service type is generated according to a key identifier of a first-service root key of a first service type and a service code of the target service in the second service type.

The first UE may be any UE that performs related services based on a sidelink (SL). Exemplarily, the first UE may establish the SL based on a PC5 interface or a SR5 interface, and perform related services based on the SL. The first UE and the second UE may perform interaction of the first service type and the target service in the second service type based on a unicast link of the SL.

The first service type and the target service in the second service type may be different types of services based on a SL communication.

In embodiments of the invention, the first UE may be a source UE performing related service based on the SL or a target UE performing related service based on the SL.

In order to ensure the security of a service, a key negotiation is carried out before performing SL-based related services between the first UE and the second UE.

If the first-service root key of the first service type has been generated through a mutual UE discovery and a key negotiation between the first UE and the second UE, the first-service root key of the first service type and a key identifier (ID) of the root key are stored locally in the first UE. Then the first UE may deduce or calculate the target-service root key of the target service in the second service type according to the key identifier of the first-service root key of the first service type.

The target service here may be any service in the second service type that the first UE and the second UE are prepared to perform this time.

In some embodiments, S1110 may include the following cases.

If the first UE and the second UE have negotiated the first-service root key of the first service type in advance and the first-service root key of the first service type is valid, the target-service root key of the target service in the second service type is generated according to the key identifier of the root key and a service code of the target service in the second service type.

If the first UE has not negotiated the first-service root key of the first service type with the second UE, the first UE and the second UE negotiates the target-service root key of the target service in the second service type with the second UE according to a key establishment process.

If the first UE and the second UE have previously negotiated the first-service root key of the first service type, but the first-service root key of the first service type has become invalid, the first UE and the second UE negotiates the target-service root key of the target service in the second service type with the second UE according to the key establishment process.

The first-service root key of the first service type being valid may include at least one of:
the first-service root key of the first service type being within its validity period; or
no security problem being found in the process of generating a session key according to the first-service root key of the first service type for a first service type communication.

The first-service root key of the first service type having become invalid may include at least one:
the first-service root key of the first service type being not within its validity period; or,
a security problem has been found in the process of generating a session key according to the first-service root key of the first service type for a first service type communication.

It is worth noting that, when no validity period is set for the first-service root key of the first service type or the validity period of the first-service root key of the first service type is ignored, if the first UE still stores the root key for performing the first service with the second UE, the first UE may directly generate the target-service root key of the target service in the second service type according to the key identifier of the first-service root key of the first service type and the service code of the target service in the second service type.

It should be understood that the service code may be an identifier of the service and may correspond to a character string including multiple characters.

Different services based on the SL may have different service codes.

Exemplarily, a proximity based service (ProSe), a vehicle to everything (V2X) service, and a ranging/sidelink positioning service, that are performed based on the SL, may be configured with different service codes.

If the service code is introduced to generate the target-service root key of the target service in the second service type, different root keys of different target services in the second service type will be generated for the different target services in the second service type according to the same key identifier of the first-service root key of the first service type, thus realizing a security isolation of the root keys of the service.

Negotiating the target-service root key of the target service in the second service type with the second UE according to the key negotiation process may include:
determining a root key of the second service type according to a credential.

The credential may be a long term credential, which may be a credential for the second type service, or the credential may be a credential issued by a communication operator, or a credential issued by a third certification authority.

The second UE here is a peer-to-end UE of the first UE. Exemplarily, if the first UE is a source UE, the second UE is a target UE for related services based on the SL; or, if the first UE is a target UE, the second UE may be a source UE that performs related services based on the SL.

As shown in FIG. 2B, an embodiment of the invention provides a method for generating a key. The method is performed by a first UE, and includes the following steps.

At S 1110B, a target-service root key of a target service in a second service type is generated according to a key identifier of a first-service root key of a first service type and a service code of the target service in the second service type.

At S 1120B, a session key of the target service in the second service type is generated according to the target-service root key of the target service in the second service type.

In an embodiment of the invention, the session key of the target service in the second service type is generated according to the target-service root key of the target service in the second service type. The session key is a key directly used by the first UE and the second UE for the target service in the second service type based on the SL.

In some embodiments, if the target service of the second service type between the first UE and the second UE stops, or has not been started, or the relative positioning between the second UE and the first UE increases, and thus a relevant operation of the target service based on the SL cannot be performed, a key generation algorithm is terminated at the generation of the target-service root key of the target service in the second type of service.

Exemplarily, the session key includes:
a confidentiality protection key for encrypting service data of the target service in the second service type; and/or,
an integrity protection key for an integrity protection of the service data of the target service in the second service type.

In conclusion, the method for generating a key in the embodiments of the invention is used to realize a security isolation of each service, while reducing an unnecessary key negotiation.

In some embodiments, assuming that the first UE is a source UE, S1110 may include:
sending a direct communication request to the second UE, the direct communication request including: the key identifier of the first-service root key of the first service type, the service code of the target service in the second service type, and security capability information of the first UE, in which the security capability information of the first UE may indicate a security algorithm supported by the first UE; and
receiving a direct security mode command returned by the second UE based on the direct communication request.

The key identifier of the first-service root key of the first service type and the service code of the target service in the second service type are sent to the second UE, which triggers the second UE to generate the target-service root key of the target service in the second service type according to the key identifier of the first-service root key of the first service type and the service code of the target service in the second service type.

If the direct security mode command is successfully received, it means that the second UE has generated the target-service root key of the target service in the second service type according to the key identifier of the first-service root key of the first service type and the service code of the target service in the second service type.

In some embodiments, the direct security mode command returned by the second UE also includes: an algorithm identity of the security algorithm selected based on security capability information of the first UE.

The security algorithm may include: a security algorithm for a service data transmission of the target service in the second service type.

Exemplarily, the security algorithm may include: a confidentiality protection algorithm and/or an integrity protection algorithm.

In other embodiments, assuming that the first UE is a target UE, S1110 may include:
receiving a direct communication request sent by the second UE, in which the direct communication request includes: the key identifier of the first-service root key of the first service type, the service code of the target service in the second service type, and the security capability information of the first UE; the security capability information of the second UE indicating the security algorithm supported by the first UE;
generating the target-service root key of the target service in the second service type according to the service code of the target service in the second service type and the key identifier of the first-service root key of the first service type; and
returning the direct security mode command to the second UE after generating the target-service root key of the target service in the second service type.

At this time, the second UE also selects the security algorithm both supported by the first UE and the second UE for the service communication of the target service in the second service type according to the security capability information of the second UE, and returns the direct security mode command carrying an algorithm identity of the selected security algorithm to the second UE.

In some embodiments, S1110A or S1110B may include: generating the target-service root key of the target service in the second service type according to the key identifier and the service code.

S1110A or S1110B may include at least one of:
generating the target-service root key of the target service in the second service type according to the key identifier, a length of the key identifier, and the service code;
generating the target-service root key of the target service in the second service type according to the key identifier, a length of the key identifier, the service code, and a length of the service code; or
generating the target-service root key of the target service in the second service type according to the key identifier, the service code, and a length of the service code.

The length of the key identifier here may be: a number of bits occupied by a character string of the key identifier when being written in binary.

The length of the service code may be: a number of bits occupied by a character string of the service code when being written in binary.

In conclusion, there are various ways to generate the target-service root key of the target service in the second service type according to the key identifier of the first-service root key of the first service type and the service code of the target service in the second service type, which is not limited to the above examples.

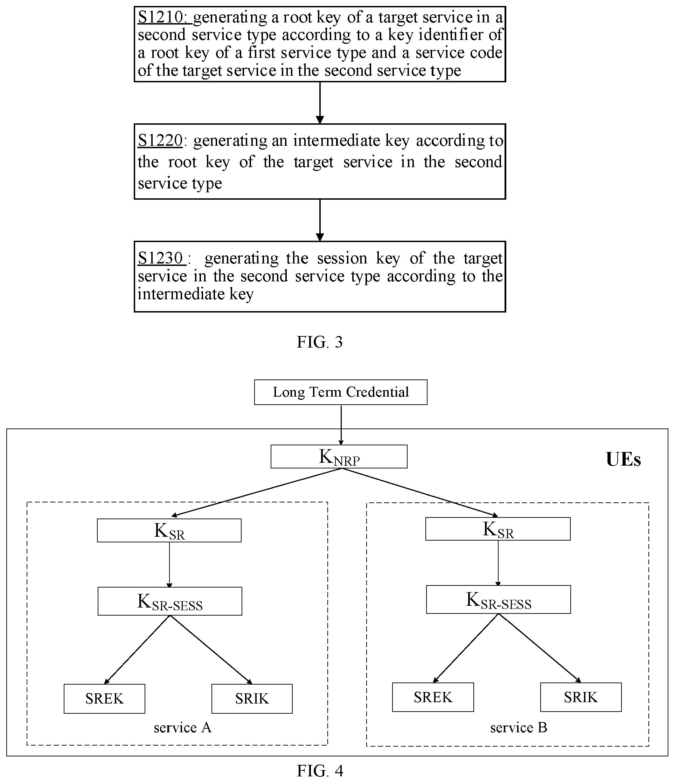

FIG. 3 is a flowchart of a method for generating a key according to an embodiment of the disclosure. As shown in FIG. 3, an embodiment of the invention provides a method for generating a key. The method is performed by a first UE, and includes the following steps.

At S1210, a target-service root key of a target service in a second service type is generated according to a key identifier of a first-service root key of a first service type and a service code of the target service in the second service type.

At S1220, an intermediate key is generated according to the target-service root key of the target service in the second service type.

At S1230, the session key of the target service in the second service type is generated according to the intermediate key.

In some embodiments of the invention, the target-service root key of the target service in the second service type is generated according to the service code of the target service in the second service type and the key identifier of the first-service root key of the first service type. Specific details have been described in the above embodiments and will not be repeated here.

Optionally, in response to generating the target-service root key of the target service in the second service type, the intermediate key is generated according to the root key, and then the session key of the target service in the second service type is generated according to the intermediate key. Specifically, it will be described in detail in the following embodiments.

FIG. 4 shows a key architecture. In the key architecture shown in FIG. 4, key of next generation Radio ProSe (K_{NRP}) may be a first-service root key of the first service type; K_{SR} may be a target-service root key of the target service in the second service type; and K_{SR-SESS} may be an intermediate key of the target service in the second service type. SREK and SRIK are session keys of the target service in the second service type. Exemplarily, the SREK may be a confidentiality protection key of the target service in the second service type; and the SPIK may be an integrity protection key of the target service in the second service type. In some embodiments, assuming that the first UE is a source UE, the method also includes:
confirming that the second UE has completed the generation of the target-service root key of the target service in the second service type after receiving a direct security mode command returned by the second UE, and further starting the generation of the intermediate key and the session key of the target service in the second service type.

The intermediate key is generated according to the target-service root key of the target service in the second service type.

After generating the intermediate key of the target service in the second service type, the first UE sends a direct security mode complete message to the second UE. The direct security mode complete message may be used to trigger the second UE to generate the session key of the target service in the second service type.

In other embodiments, assuming that the first UE is a target UE, the method also includes:
receiving a direct security mode complete message returned by the second UE, in which the direct security mode complete message may be used to trigger the second UE to generate the session key of the target service in the second service type;
generating the session key according to the target-service root key of the target service in the second service type; and
sending a direct communication accept message to the second UE after generating the session key.

The direct communication accept message may be used to trigger the second UE to further generate the session key of the target service in the second service type according to the intermediate key of the target service in the second service type.

In some embodiments, generating the intermediate key according to the target-service root key of the target service in the second service type includes:
generating a first random number;
receiving a second random number generated by the second UE; and
generating the intermediate key based on the first random number, the second random number, and the target-service root key of the target service in the second service type.

Exemplarily, if the first UE is a source UE, the second random number generated by the second UE may be returned to the first UE by being carried in the direct security mode command. If the first UE is a target UE, the second random number generated by the second UE may be sent to the second UE by being carried in the direct communication request.

In embodiments of the invention, the first random number, the second random number, and the target-service root key of the target service in the second service type are input into a key generation formula as dependent variables, to generate the intermediate key.

Exemplarily, generating the intermediate key based on the first random number, the second random number, and the target-service root key of the target service in the second service type includes:
generating the intermediate key based on the first random number, a length of the first random number, the second random number, a length of the second random number, and the target-service root key of the target service in the second service type.

The first UE and the second UE exchange the first random number and the second random number with each other. Since the first random number and the second random number are generated randomly based on a random algorithm, there may be two different random numbers generated for the communication of the target service in the second service type at different times. Therefore, different intermediate keys can be generated based on the same target-service root key of the target service in the second service type, and the session key of the target service in the second service type can change at different times, thus further improving the security of the target service in the second service type.

In some embodiments, the method also includes:
sending a direct communication request to the second UE, in which the direct communication request includes: the first random number, a key identifier of the first-service root key of the first service type, and security capability information of the first UE.

Receiving the second random number generated by the second UE includes:
receiving a direct security mode command of the second UE, in which the direct security mode command includes: the second random number and an algorithm identity of a security algorithm selected according to the security capability information.

The algorithm identity may include an algorithm identity shared by a confidentiality protection algorithm and/or an integrity protection algorithm, or the algorithm identity may include an algorithm identity of a confidentiality protection algorithm and an algorithm identity of an integrity protection algorithm.

The first random number and the second random number are used for generating the intermediate key of the target service in the second service type, and the algorithm identity may be used for generating the session key of the target service in the second service type.

In some embodiments, generating the session key of the target service in the second service type according to the intermediate key includes:
determining an algorithm identity of a security algorithm for the target service in the second service type performed by the first UE and the second UE; and
generating the session key of the target service in the second service type according to the algorithm identity and the intermediate key.

The algorithm identity here may be determined by the negotiation between the first UE and the second UE. For example, one of the first UE and the second UE informs a peer-to-end UE of the security algorithm it supports via the security capability information. In this way, the peer-to-end UE selects the security algorithm both supported by the first UE and the second UE based on the security capability information, and informs each other of the algorithm identity of the selected security algorithm, thus completing the selection of the security algorithm between the first UE and the second UE. After the algorithm identity is determined, the session key of the target service in the second service type is generated.

Exemplarily, generating the session key of the target service in the second service type according to the algorithm identity and the intermediate key includes:
generating the session key of the target service in the second service type according to the algorithm identity, a length of the algorithm identity, and the intermediate key.

Specifically, an integrity protection key for the session of the target service in the second service type is generated according to an integrity protection code, an algorithm identity of the integrity protection algorithm, a length of the algorithm identity of the integrity protection algorithm, and the intermediate key.

A confidentiality protection key for the session of the target service in the second service type is generated according to a confidentiality protection code, an algorithm identity of the confidentiality protection algorithm, a length of the algorithm identity of the confidentiality protection algorithm, and the intermediate key.

Different protection codes are used in the specific generation of the integrity protection keys and the confidentiality protection key. For example, when generating the confidentiality protection key, a value of the confidentiality protection code may be 00; and when generating the integrity protection key, a value of the integrity protection code may be 01.

In some embodiments, the first service type includes at least one of:
a ProSe; and/or
a V2X service.

In some embodiments, the second service type includes:
a ranging/sidelink positioning service.

Of course, the above are only examples of the first service type and the second service type, and specific implementations are not limited to the above examples.

In some embodiments, the first service type may be a service type that occurs more frequently than the second service type based on statistical data.

In other embodiments, the first service type may be a service type with a security level lower than the security level of the second service type.

In some embodiments, the first service type is a service type more basic than the second service type. Exemplarily, the first service type may be any service initiated based on the SL that is earlier than the target service in the second service type.

Of course, the above are only examples of the relevance and differences of service characteristics between the first service type and the second service type, and specific implementations are not limited to the above examples.

In some embodiments, the method also includes:
determining whether the first-service root key of the first service type exists;
in which generating the target-service root key of the target service in the second service type according to the key identifier of the first-service root key of the first service type and the service code of the target service in the second service type includes:
determining the existence of the first-service root key of the first service type, and generating the target-service root key of the target service in the second service type according to the key identifier of the first-service root key of the first service type and the service code of the target service in the second service type.

At this time, determining whether the first-service root key of the first service type exists may include:
determining whether the first-service root key of the first service type that has been determined exists between the first UE and the second UE.

Therefore, in this embodiment, only when the first-service root key of the first service type exists, the target-service root key of the target service in the second service type is generated according to the first-service root key of the first service type and the service code of the target service in the second service type.

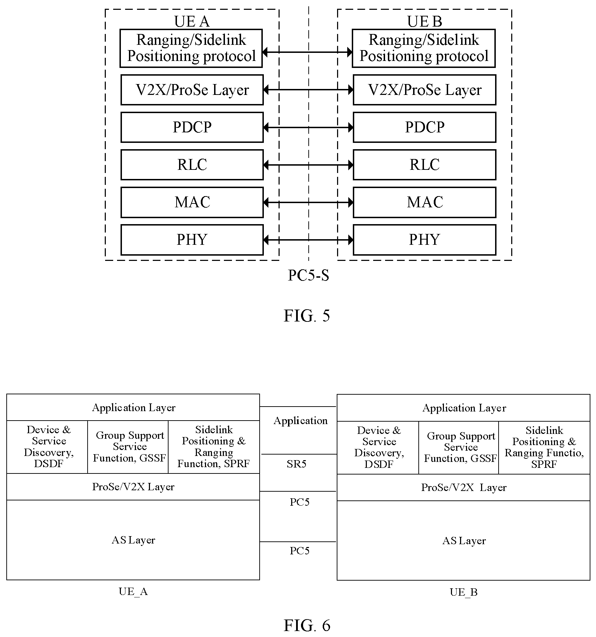

In the current architecture used to support the ranging/sidelink positioning service, as shown in FIG. 5 and FIG. 6, a ranging/sidelink positioning protocol is performed by transmitting a ranging capability, auxiliary data and position information between UEs, and an SR5 interface is further proposed based on the PC5 interface to support the ranging/sidelink positioning service.

In order to realize the control of a ranging/sidelink positioning operation, the following procedures are to be performed, including:
discovering a ranging/sidelink positioning device;
establishing a direct communication for a ranging/sidelink positioning procedure; and
a ranging/sidelink positioning procedure.

To carry the SR5 signaling, a non-Internet protocol (IP) packet data convergence protocol (PDCP) service data unit (SDU) type is used over a user plane PC5 reference point.

As shown in FIG. 5, UE A and UE B may include:
a physical (PHY) layer;
a media access control (MAC) layer;
a radio link control (RLC) layer;
a PDCP layer;
a V2X/ProSe layer, configured to provide a V2X/Prose service; and
a ranging/sidelink positioning protocol layer, configured to provide a ranging/sidelink service.

As shown in FIG. 6, layers of the UE A (also known as UE-A) and the UE B (also known as UE-B), below the V2X/ProSe layer, are access stratum (AS) layers.

The SR5 interface corresponding to the ranging/sidelink positioning protocol layer has at least three functions, namely a device & service discovery (DSDF), a group support service function (GSSF), and a ranging/sidelink positioning function (SPRF).

It is further included an application (App) layer above the ranging/sidelink positioning protocol layer.

Since the RSPP/SR5 is established on top of the PC5 direct communication protocol, the security protection of the direct communication on the RSPP/SR5 may rely on the security protection of the PC5 direct communication in related art. This means that the root key of the existing PC5 sidelink (e.g., established for the ProSe/V2X service) may be reused for the ranging/sidelink positioning service between the same pair of UEs.

When there are multiple ranging/sidelink positioning services between the UEs, these ranging/sidelink positioning services share the same root key.

Considering that ranging/sidelink positioning services for different purposes may require different security levels (e.g., a public safety service and an entertainment service), sharing the same root key will downgrade a higher security level to a lower security level.

Therefore, in the embodiments of the invention, root keys of different services are separated to realize the security isolation of various ranging/sidelink positioning services.

If the root key of the PC5 direct communication link can be reused by the ranging/sidelink positioning service, when there is no activate unicast communication session between the UEs, the UE may still continue to store the root key K_{NRP} of the PC5 unicast link. That is, the root key K_{NRP} of the related art (e.g. generated for the ProSe/V2X service) may be reused for the ranging/sidelink positioning service. However, security requirements of various ranging/sidelink positioning services may be different, it is recommended that the root keys of the ranging/sidelink positioning services should be separate and independent from each other to isolate the security established for different services.

K_{NRP} is generated through the authentication and the key establishment procedure based on a long term credential. The long term credential is provided to the UE as a root of the security of the PC5 unicast link. For supporting both the ProSe/V2X service and the ranging/sidelink positioning service, the authentication procedure supported by the UE may also be used for the ProSe/V2X service and the ranging/sidelink positioning service. If the long term credential and the authentication procedure used for the ProSe/V2X service are also used for the ranging/sidelink positioning service, the K_{NRP} generated via the authentication procedure and the long term credential are therefore used for the ranging/sidelink positioning service.

In order to isolate the security established for different ranging/sidelink positioning services, root keys between a pair of UEs for different types of services should be separated.

Different root keys for the ranging/sidelink positioning service between a pair of UEs are derived from the K_{NRP}. Therefore, the key hierarchy structure for direct communication of the ranging/sidelink positioning service is shown in FIG. 3.

K_{SR} is a root key shared between the two UEs communicating via the PC5 unicast link for the ranging/sidelink positioning service. The K_{SR} may be generated according to the root key K_{NRP} of the ProSe and the V2X service.

K_{SR-SESS} is an intermediate key derived by a UE from the K_{SR}. This intermediate key is used to derive a session key to protect a ranging data transmission between the UEs. K_{SR-SESS} ID is used to identify a K_{SR-SESS}.

SREK and SRIK, namely a PC5 ranging confidentiality protection key (also known as an encryption key for ranging, SREK) and a PC5 ranging integrity protection key (also known as an integrity key for ranging, SRIK) are used in the selected confidentiality and integrity algorithms respectively to protect a ranging signaling and ranging user plane service data over the PC5 link. A communication security process for the ranging/sidelink positioning service on the PC5 unicast link may include: exemplarily, it is possible that the two UEs have already performed or are performing the ProSe/V2X service and have established the security via the K_{NRP}.

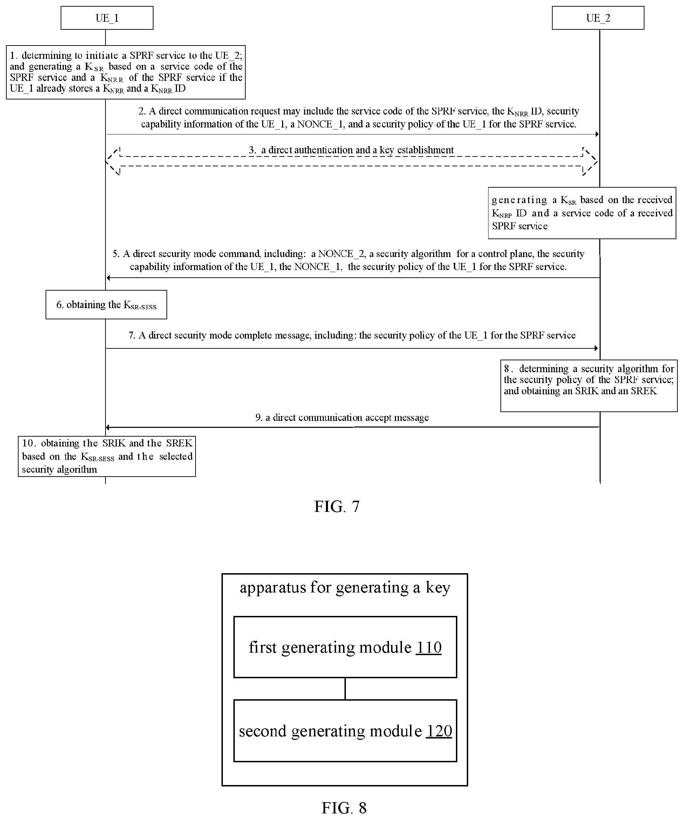

As shown in FIG. 7, the method in an embodiment of the invention may include the follows.
1. When UE_1 already has a K_{NRP} and decides to initiate a direct communication for a ranging/sidelink positioning service, the UE_1 derives (i.e. generates) a K_{SR} from the K_{NRP} and a service code of the ranging/sidelink positioning service. The K_{SR} may be a root key of the ranging/sidelink positioning service.
2. In a direct communication request message, the UE_1 includes the existing K_{NRP} ID, its own security capabilities (a list of algorithms supported by the UE_1), a random number 1 (NONCE_1), a requested ranging service code (RSC) of the ranging/sidelink positioning service, and a security policy related to service data and a signaling of the ranging/sidelink positioning service of the UE_1.
3. For the UE which already has an existing K_{NRP}, the authentication and the key establishment procedure can be skipped.
4. UE_2 generates a K_{SR} based on the existing K_{NRP} (identified via the received K_{NRP} ID) and a service code of a received ranging/sidelink positioning service. The UE_2 further derives a K_{SR-SESS}, a SRIK and a SREK based on the received NONCE_1, a random number 2 (NONCE_2) generated by the UE_2 and a selected security algorithm. The SRIK and the SREK may be used at least for the service data of the ranging/sidelink positioning service. In other embodiments, the SRIK and the SREK may also be applied to the signaling of the ranging/sidelink positioning service.
5. The UE_2 sends a direct security mode command to the UE_1, which may include: the NONCE_2, the selected algorithm for protecting the signaling, etc. This message is integrity protected by the UE_2 using the SRIK derived in step 4.
6. In response to receiving the direct security mode command, the UE_1 derives the K_{SR-SESS}, the SRIK and the SREK based on the NONCE_1 generated by the UE_1, the received NONCE_2 and the selected algorithm. This message is integrity protected by UE_1 using the derived SRIK.
7. The UE_1 sends a direct security mode complete message to the UE_2. The direct security mode complete message may include policy information of a security policy of a user plane of the ranging/sidelink positioning service. The security policy supported by the UE_1 may be carried in the above direct communication request.
8. The UE_2 determines the security policy of the user plane of the ranging/sidelink positioning service to be used based on the received security policy of the user plane of the UE_1 and the security policy of the user plane of the ranging/sidelink positioning service of the UE_2, and then selects a security algorithm for protecting the user plane. The UE_2 further derives an SRIK and an SREK.
9. The UE_2 sends a direct communication accept message to the UE_1, which includes an algorithm identity of the selected security algorithm.
10. The UE_1 derives an SRIK and an SREK based on the received selected algorithm.

The generation (i.e., derivation) of various keys may be as follows.

K_{SR} may be calculated as follows:
When calculating the K_{SR} from the K_{NRP}, the following parameters are used as inputs to the key generation formula:
P0 = a service code of the ranging/sidelink positioning service;
L0 = a length of the service code;
P1 = K_{NRP} ID;
L1 = a length of the K_{NRP} ID; and
an input key is the K_{NRP}.

Different ranging/sidelink positioning services have different service codes. Therefore, the derived KSR is specific for a requested ranging/sidelink positioning service.

The calculation of a KSR-SESS may be as follows.

When calculating the K_{SR-SESS} from the K_{SR}, the following parameters are used as inputs to the key generation formula:
P0 = NONCE_1;
L0 = a length of the NONCE_1;
P1 = NONCE_2;
L1 = a length of the NONCE_2; and
an input key is the K_{SR}.

The calculation of an SREK and an SRIK can be as follows.

When calculating the SRIK or the SREK from the K_{SR-SESS}, the following parameters are used as inputs to the key generation formula:
If calculating the SREK, P0 = 0x00; if calculating the SRIK, - P0 = Ox01;
L0 = a length of the P0;
P1 = an algorithm identity;
L1 = a length of the algorithm identity; and
an input key is K_{SR-SESS}.

The UE shall be able to generate a separate security context for each ranging/sidelink positioning service. The security context may include a K_{SR}, a K_{SR-SESS}, an SRIK and an SREK.

The UE shall be able to determine whether a K_{SR} is needed to be derived from a K_{NRP} of other services before the UE initiates a direct communication for a ranging/sidelink positioning service.

The UE shall be able to derive a K_{SR} from a K_{NRP}, a K_{NRP} ID and a ranging service code.

The UE shall be able to derive a K_{SR-SESS} from a K_{SR} and a self-generated random number (NONCE) and a received NONCE.

The UE shall be able to derive an SRIK and an SREK from a K_{SR-SESS} and a corresponding algorithm identity.

As shown in FIG. 8, an embodiment of the invention provides an apparatus for generating a key. The apparatus includes:
a first generating module 110, configured to generate a target-service root key of a target service in a second service type according to a key identifier of a first-service root key of a first service type and a service code of the target service in the second service type.

In other embodiments, the apparatus also includes:
a second generating module 120, configured to generate a session key of the target service in the second service type according to the target-service root key of the target service in the second service type.

The apparatus for generating a key may be included in a first UE.

In some embodiments, the first generating module 110 and the second generating module 120 may be program modules. When the program module is executed by the processor, the above operations can be performed.

In other embodiments, the first generating module 110 and the second generating module 120 may be software-hardware combining modules. The software-hardware combining module includes, but is not limited to, a programmable array. The programmable array includes, but is not limited to, a field programmable gate array and/or a complex programmable gate array.

In some embodiments, the first generating module 110 and the second generating module 120 may include a pure hardware module. The pure hardware module includes, but is not limited to, an application specific integrated circuit (ASIC).

In some embodiments, the first generating module 110 is configured to generate the target-service root key of the target service in the second service type according to the key identifier, a length of the key identifier, the service code, and a length of the service code.

In some embodiments, the second generating module 120 is configured to generate an intermediate key according to the target-service root key of the target service in the second service type; and generate the session key of the target service in the second service type according to the intermediate key.

In some embodiments, the second generating module 120 is configured to generate a first random number; receive a second random number generated by a second UE; and generate the intermediate key based on the first random number, the second random number, and the target-service root key of the target service in the second service type.

In some embodiments, the second generating module 120 is configured to determine an algorithm identity of a security algorithm for the target service in the second service type performed by the first UE and the second UE; and generate the session key of the target service in the second service type according to the algorithm identity and the intermediate key.

In some embodiments, the first service type includes at least one of: a ProSe; and/or a V2X service.

In some embodiments, the second service type includes: a ranging/sidelink positioning service.

In some embodiments, the apparatus also includes:
a determining module, configured to determine whether the first-service root key of the first service type exists; and
the second generating module 120 is configured to, determine the existence of the first-service root key of the first service type, and generate the target-service root key of the target service in the second service type according to the key identifier of the first-service root key of the first service type and the service code of the target service in the second service type.

The embodiments of the invention provide a communication device, including:
a memory for storing instructions executable by a processor;
a processor, respectively connected with the memory.

The processor is configured to perform the methods in any one of the above technical solutions.

The processor may include various types of storage media, in which the storage medium is a non-transitory computer storage medium that can continuously save and store information on the communication device after the communication device is powered off.

The communication device includes: a UE or a network element. The network element may be any one of the first NE to the fourth NE.

The processor may be connected to the memory via a bus, and the processor is configured to read an executable program stored on the memory, for performing, for example, at least one of the methods shown in FIG. 2A, FIG. 2B, FIG. 3, and FIG. 7.

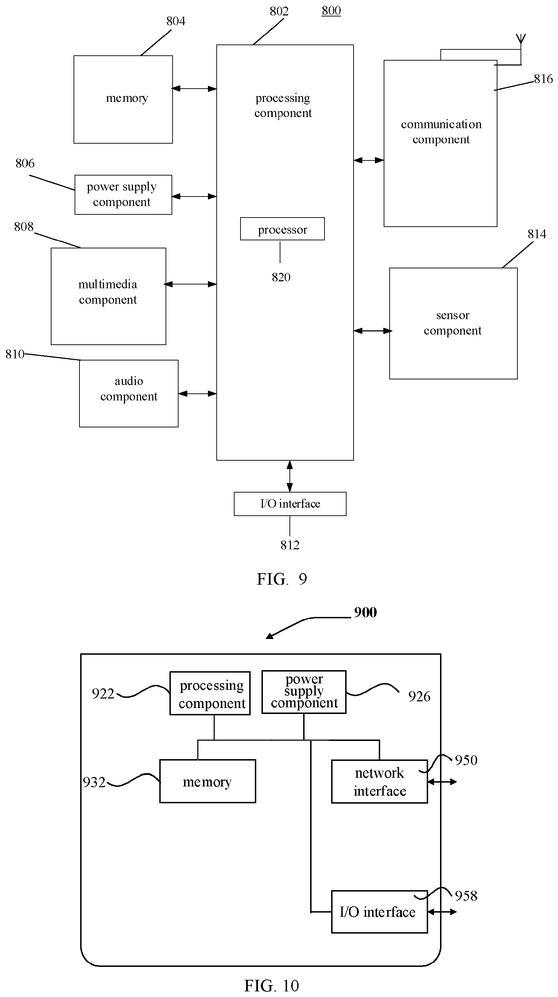

FIG. 9 is a block diagram of a UE 800 according to an exemplary embodiment. For example, the UE 800 may be a mobile phone, a computer, a digital broadcast user device, a message sending and receiving device, a game console, a tablet device, a medical device, a fitness device, a personal digital assistant, etc.

Referring to FIG. 9, the UE 800 may include one or more of: a processing component 802, a memory 804, a power supply component 806, a multimedia component 808, an audio component 810, an input/output (I/O) interface 812, a sensor component 814, and a communication component 816.

The processing component 802 typically controls the overall operation of the UE 800, such as those associated with a display, a telephone call, a data communication, a camera operation, and a recording operation. The processing component 802 may include one or more processors 820 to execute instructions to generate all or part of steps of the above methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of these data include instructions of any application or method used to operate on the UE 800, contact data, phone book data, messages, pictures, videos, etc. The memory 804 may be implemented by any type of volatile or non-volatile memory or their combination, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 806 provides power to the various components of the UE 800. The power supply component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a TP, the screen may be a touch screen to receive signals input by the user. The touch panel includes one or more touch sensors to sense a touch, swiping, and gesture on the touch panel. The touch sensor can not only sense the boundary of a touch or sliding action, but also detect the duration and pressure associated with the touch or sliding operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera or each rear camera may be a fixed optical lens system or has a focal length and an optical zoom capability.

The audio component 810 is configured to output and/or input audio signals. For example, the audio component 810 includes a microphone (MIC) that is configured to receive external audio signals when the UE 800 is in an operational mode, such as a call mode, a recording mode, and a speech recognition mode. The received audio signal may be further stored in the memory 804 or transmitted via a communication component 816. In some embodiments, the audio component 810 also includes a speaker for the output of an audio signal.

The I/O interface 812 provides an interface between the processing component 802 and the peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects of the UE 800. For example, the sensor component 814 may detect an on/off state of the equipment 800, and a relative positioning of the component. For example, the component is a display and a keypad of the UE 800, the sensor component 814 may also detect a change of the position of the UE 800 or a change of one component of the UE 800, detect a presence or an absence of a contact between the user and with the UE 800, detect a direction of the UE 800, or detect an acceleration/deceleration and detect a temperature change of the UE 800. The sensor component 814 may include a proximity sensor configured to detect the presence of nearby objects without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the UE 800 and other devices. The UE 800 may access a wireless network based on a communication standard, such as WiFi, 2G or 3G, or their combination. In an exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In exemplary embodiments, a non-transitory computer readable storage medium including instructions is also provided, such as a memory 804 including instructions. The instructions may be executed by the processor 820 of the UE 800 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

As shown in FIG. 10, an embodiment of the invention provides a structure of an access device. For example, the communication device 900 can be provided as a network-side device. The communication device may be a variety of network elements such as an access network element and/or a network function mentioned above.

Referring to FIG. 10, the communication device 900 includes a processing component 922, which further includes one or more processors, and a memory resource represented by the memory 932 for storing instructions executable by the processing component 922, such as an application program. The application stored in memory 932 may include one or more modules, each module corresponds to a set of instructions. In addition, the processing component 922 is configured to execute instructions to execute any one of the above methods that can be applied to the access device, such as any one of the methods shown in FIG. 2A, FIG. 2B, FIG. 3, or FIG. 7.

The communication device 900 may also include a power supply component 926 configured to perform power management for the communication device 900, a wired or wireless network interface 950 configured to connect the communication device 900 to the network, and an I/O interface 958. The communication device 900 may operate an operating system stored on the memory 932, such as a Windows Server^{™}, a Mac OS X^{™}, a Unix^{™}, a Linux^{™}, a FreeBSD^{™}, and the like.

Other embodiments of the invention will be apparent to those skilled in the art from consideration of the specification and practice of the invention disclosed here. The invention is intended to cover any variations, uses, or adaptations of the invention following the solutions thereof and including such departures from the invention as come within known or customary practice in the art. It is intended that the specification and examples be considered as exemplary only, with a true scope of the invention being indicated by the following claims.

It should be understood that the invention is not limited to the precise structure described above and shown in attached drawings, and various modifications and alterations may be made without going beyond the scope of the invention. Therefore, the protection scope of the invention shall be subject to the claims.

## Claims

1. A method for generating a key, performed by a first user equipment, UE, comprising:
deriving a target-service root key of a target service in a second service type according to a key identifier of a first-service root key of a first service type and a service code of the target service in the second service type (S1110A; S1110B; S1210);
wherein deriving the target-service root key of the target service in the second service type according to the key identifier of the first-service root key of the first service type and the service code of the target service in the second service type comprises:
deriving the target-service root key of the target service in the second service type according to the key identifier, a length of the key identifier, the service code, and a length of the service code.

2. The method according to claim 1, further comprising:
deriving a session key of the target service in the second service type according to the target-service_root key of the target service in the second service type (S 1120B).

3. The method according to claim 2, wherein deriving the session key of the target service in the second service type according to the target-service root key of the target service in the second service type comprises:
deriving an intermediate key according to the target-service root key of the target service in the second service type (S1220); and
deriving the session key of the target service in the second service type according to the intermediate key (S1230).

4. The method according to claim 3, wherein deriving the intermediate key according to the target-service root key of the target service in the second service type comprises:
generating a first random number;
receiving a second random number generated by a second UE; and
deriving the intermediate key based on the first random number, the second random number, and the target-service root key of the target service in the second service type.

5. The method according to claim 3, wherein deriving the session key of the target service in the second service type according to the intermediate key comprises:
determining an algorithm identity of a security algorithm for the target service in the second service type performed by the first UE and a second UE; and
deriving the session key of the target service in the second service type according to the algorithm identity and the intermediate key.

6. The method according to claim 4, wherein deriving the session key of the target service in the second service type according to the intermediate key comprises:
determining an algorithm identity of a security algorithm for the target service in the second service type performed by the first UE and the second UE; and
deriving the session key of the target service in the second service type according to the algorithm identity and the intermediate key.

7. The method according to any one of claims 1 to 6, wherein the first service type comprises at least one of:
a proximity based service, ProSe; or
a vehicle to everything, V2X, service.

8. The method according to any one of claims 1 to 7, wherein the second service type comprises:
a ranging/sidelink positioning service.

9. The method according to any one of claims 1 to 8, further comprising:
determining whether the first-service root key of the first service type exists;
wherein deriving the target-service root key of the target service in the second service type according to the key identifier of the first-service root key of the first service type and the service code of the target service in the second service type comprises:
determining the existence of the first-service root key of the first service type, and deriving the target-service root key of the target service in the second service type according to the key identifier of the first-service root key of the first service type and the service code of the target service in the second service type.

10. A first user equipment, UE, comprising:
a first generating module (110), configured to derive a target-service root key of a target service in a second service type according to a key identifier of a first-service root key of a first service type and a service code of the target service in the second service type;
wherein the first generating module (110) is configured to:
derive the target-service root key of the target service in the second service type according to the key identifier, a length of the key identifier, the service code, and a length of the service code.

11. The first UE according to claim 10, further comprising:
a second generating module (120), configured to derive a session key of the target service in the second service type according to the target-service root key of the target service in the second service type.

12. The first UE according to claim 11, wherein the second generating module (120) is configured to:
derive an intermediate key according to the target-service root key of the target service in the second service type; and
derive the session key of the target service in the second service type according to the intermediate key.

13. The first UE according to claim 12, wherein the second generating module (120) is configured to:
generate a first random number;
receive a second random number generated by a second UE; and
derive the intermediate key based on the first random number, the second random number, and the target-service root key of the target service in the second service type.

14. A computer-readable storage medium storing an executable program that, when executed by a processor of a first user equipment, UE, causes the first UE to implement the method according to any one of claims 1 to 9.

## Patentansprüche

1. Ein Verfahren zum Erzeugen eines Schlüssels, das von einem ersten Nutzergerät, UE, durchgeführt wird, das folgenden Schritt aufweist:
Ableiten eines Zieldienst-Stammschlüssels eines Zieldienstes in einem zweiten Diensttyp gemäß einer Schlüsselkennung eines Erster-Dienst-Stammschlüssels eines ersten Diensttyps und einem Dienstcode des Zieldienstes in dem zweiten Diensttyp (S1110A; S1110B; S1210);
wobei das Ableiten des Zieldienst-Stammschlüssels des Zieldienstes in dem zweiten Diensttyp gemäß der Schlüsselkennung des Erster-Dienst-Stammschlüssels des ersten Diensttyps und dem Dienstcode des Zieldienstes in dem zweiten Diensttyp folgenden Schritt aufweist:
Ableiten des Zieldienst-Stammschlüssels des Zieldienstes in dem zweiten Diensttyp gemäß der Schlüsselkennung, einer Länge der Schlüsselkennung, dem Dienstcode und einer Länge des Dienstcodes.

2. Das Verfahren gemäß Anspruch 1, das ferner folgenden Schritt aufweist:
Ableiten eines Sitzungsschlüssels des Zieldienstes in dem zweiten Diensttyp gemäß dem Zieldienst-Stammschlüssel des Zieldienstes in dem zweiten Diensttyp (S1120B).

3. Das Verfahren gemäß Anspruch 2, wobei das Ableiten des Sitzungsschlüssels des Zieldienstes in dem zweiten Diensttyp gemäß dem Zieldienst-Stammschlüssel des Zieldienstes in dem zweiten Diensttyp folgende Schritte aufweist:
Ableiten eines Zwischenschlüssels gemäß dem Zieldienst-Stammschlüssel des Zieldienstes in dem zweiten Diensttyp (S1220); und
Ableiten des Sitzungsschlüssels des Zieldienstes in dem zweiten Diensttyp gemäß dem Zwischenschlüssel (S1230).

4. Das Verfahren gemäß Anspruch 3, wobei das Ableiten des Zwischenschlüssels gemäß dem Zieldienst-Stammschlüssel des Zieldienstes in dem zweiten Diensttyp folgende Schritte aufweist:
Erzeugen einer ersten Zufallszahl;
Empfangen einer zweiten Zufallszahl, die von einem zweiten UE erzeugt wird; und
Ableiten des Zwischenschlüssels basierend auf der ersten Zufallszahl, der zweiten Zufallszahl und dem Zieldienst-Stammschlüssel des Zieldienstes in dem zweiten Diensttyp.

5. Das Verfahren gemäß Anspruch 3, wobei das Ableiten des Sitzungsschlüssels des Zieldienstes in dem zweiten Diensttyp gemäß dem Zwischenschlüssel folgende Schritte aufweist:
Bestimmen einer Algorithmusidentität eines Sicherheitsalgorithmus für den Zieldienst in dem zweiten Diensttyp, der von dem ersten UE und einem zweiten UE durchgeführt wird; und
Ableiten des Sitzungsschlüssels des Zieldienstes in dem zweiten Diensttyp gemäß der Algorithmusidentität und dem Zwischenschlüssel.

6. Das Verfahren gemäß Anspruch 4, wobei das Ableiten des Sitzungsschlüssels des Zieldienstes in dem zweiten Diensttyp gemäß dem Zwischenschlüssel folgende Schritte aufweist:
Bestimmen einer Algorithmusidentität eines Sicherheitsalgorithmus für den Zieldienst in dem zweiten Diensttyp, der von dem ersten UE und dem zweiten UE durchgeführt wird; und
Ableiten des Sitzungsschlüssels des Zieldienstes in dem zweiten Diensttyp gemäß der Algorithmusidentität und dem Zwischenschlüssel.

7. Das Verfahren gemäß einem der Ansprüche 1 bis 6, wobei der erste Diensttyp zumindest eines der Folgenden aufweist:
einen nähebasierten Dienst, ProSe; oder
einen Vehicle-to-Everything, V2X, -Dienst.

8. Das Verfahren gemäß einem der Ansprüche 1 bis 7, wobei der zweite Diensttyp Folgendes aufweist:
einen Entfernungsmessung-/Sidelink-Positionierungsdienst.

9. Das Verfahren gemäß einem der Ansprüche 1 bis 8, das ferner folgenden Schritt aufweist:
Bestimmen, ob der Erster-Dienst-Stammschlüssel des ersten Diensttyps vorliegt;
wobei das Ableiten des Zieldienst-Stammschlüssels des Zieldienstes in dem zweiten Diensttyp gemäß der Schlüsselkennung des Erster-Dienst-Stammschlüssels des ersten Diensttyps und dem Dienstcode des Zieldienstes in dem zweiten Diensttyp folgenden Schritt aufweist:
Bestimmen des Vorliegens des Erster-Dienst-Stammschlüssels des ersten Diensttyps und Ableiten des Zieldienst-Stammschlüssels des Zieldienstes in dem zweiten Diensttyp gemäß der Schlüsselkennung des Erster-Dienst-Stammschlüssels des ersten Diensttyps und dem Dienstcode des Zieldienstes in dem zweiten Diensttyp.

10. Ein erstes Nutzergerät, UE, das folgende Merkmale aufweist:
ein erstes Erzeugungsmodul (110), das dazu konfiguriert ist, einen Zieldienst-Stammschlüssel eines Zieldienstes in einem zweiten Diensttyp gemäß einer Schlüsselkennung eines Erster-Dienst-Stammschlüssels eines ersten Diensttyps und einem Dienstcode des Zieldienstes in dem zweiten Diensttyp abzuleiten;
wobei das erste Erzeugungsmodul (110) konfiguriert ist zum:
Ableiten des Zieldienst-Stammschlüssels des Zieldienstes in dem zweiten Diensttyp gemäß der Schlüsselkennung, einer Länge der Schlüsselkennung, dem Dienstcode und einer Länge des Dienstcodes.

11. Das erste UE gemäß Anspruch 10, das ferner folgende Merkmale aufweist:
ein zweites Erzeugungsmodul (120), das dazu konfiguriert ist, einen Sitzungsschlüssel des Zieldienstes in dem zweiten Diensttyp gemäß dem Zieldienst-Stammschlüssel des Zieldienstes in dem zweiten Diensttyp abzuleiten.

12. Das erste UE gemäß Anspruch 11, wobei das zweite Erzeugungsmodul (120) konfiguriert ist zum:
Ableiten eines Zwischenschlüssels gemäß dem Zieldienst-Stammschlüssel des Zieldienstes in dem zweiten Diensttyp; und
Ableiten des Sitzungsschlüssels des Zieldienstes in dem zweiten Diensttyp gemäß dem Zwischenschlüssel.

13. Das erste UE gemäß Anspruch 12, wobei das zweite Erzeugungsmodul (120) konfiguriert ist zum:
Erzeugen einer ersten Zufallszahl;
Empfangen einer zweiten Zufallszahl, die von einem zweiten UE erzeugt wird; und
Ableiten des Zwischenschlüssels basierend auf der ersten Zufallszahl, der zweiten Zufallszahl und dem Zieldienst-Stammschlüssel des Zieldienstes in dem zweiten Diensttyp.

14. Ein computerlesbares Speichermedium, das ein ausführbares Programm speichert, das, wenn dasselbe von einem Prozessor eines ersten Nutzergeräts, UE, ausgeführt wird, das erste UE veranlasst, das Verfahren gemäß einem der Ansprüche 1 bis 9 zu implementieren.

## Revendications

1. Procédé de génération d'une clé, mis en œuvre par un premier équipement utilisateur (UE), comprend :
la dérivation d'une clé racine de service cible d'un service cible dans un deuxième type de service selon un identifiant de clé d'une clé racine de premier service d'un premier type de service et d'un code de service du service cible dans le deuxième type de service (S1110A ; S1110B ; S1210) ;
dans lequel la dérivation de la clé racine de service cible du service cible dans le deuxième type de service, selon l'identifiant de clé de la clé racine de premier service du premier type de service et du code de service du service cible dans le deuxième type de service, comprend :
la dérivation de la clé racine de service cible du service cible dans le deuxième type de service, selon l'identifiant de clé, d'une longueur de l'identifiant de clé, du code de service et d'une longueur du code de service.

2. Procédé selon la revendication 1, comprenant en outre :
la dérivation d'une clé de session du service cible dans le deuxième type de service selon la clé racine de service du service cible dans le deuxième type de service (S1120B).

3. Procédé selon la revendication 2, dans lequel la dérivation de la clé de session du service cible dans le deuxième type de service selon la clé racine de service cible du service cible dans le deuxième type de service comprend :
la dérivation d'une clé intermédiaire selon la clé racine de service cible du service cible dans le deuxième type de service (S1220) ; et
la dérivation de la clé de session du service cible dans le deuxième type de service selon la clé intermédiaire (S1230).

4. Procédé selon la revendication 3, dans lequel la dérivation de la clé intermédiaire à partir de la clé racine du service cible, pour le deuxième type de service, comprend :
la génération d'un premier nombre aléatoire ;
la réception d'un deuxième nombre aléatoire généré par un deuxième UE ; et
la dérivation de la clé intermédiaire sur la base du premier nombre aléatoire, du deuxième nombre aléatoire et de la clé racine de service cible du service cible dans le deuxième type de service.

5. Procédé selon la revendication 3, dans lequel la dérivation de la clé de session du service cible dans le deuxième type de service selon la clé intermédiaire comprend :
la détermination d'une identité d'algorithme d'un algorithme de sécurité pour le service cible dans le deuxième type de service fourni par le premier UE et un deuxième UE ; et
la dérivation de la clé de session du service cible dans le deuxième type de service selon l'identité d'algorithme et la clé intermédiaire.

6. Procédé selon la revendication 4, dans lequel la dérivation de la clé de session du service cible dans le deuxième type de service selon la clé intermédiaire comprend :
la détermination d'une identité d'algorithme d'un algorithme de sécurité pour le service cible dans le deuxième type de service fourni par le premier UE et le deuxième UE ; et
la dérivation de la clé de session du service cible dans le deuxième type de service selon l'identité d'algorithme et la clé intermédiaire.

7. Procédé selon l'une quelconque des revendications 1 à 6, dans lequel le premier type de service comprend au moins l'un :
d'un service basé sur la proximité, ProSe ; ou
d'un service de véhicule pour tout ; V2X.

8. Procédé selon l'une quelconque des revendications 1 à 7, dans lequel le deuxième type de service comprend :
un service de télémétrie/positionnement par liaison latérale.

9. Procédé selon l'une quelconque des revendications 1 à 8, comprenant en outre :
la détermination si la clé racine de premier service du premier type de service existe ;
dans lequel la dérivation de la clé racine de service cible du service cible dans le deuxième type de service, selon l'identifiant de clé de la clé racine de premier service du premier type de service et du code de service du service cible dans le deuxième type de service, comprend :
la détermination de l'existence de la clé racine de premier service du premier type de service, et la dérivation de la clé racine de service cible du service cible dans le deuxième type de service, selon l'identifiant de clé de la clé racine de premier service du premier type de service et du code de service du service cible dans le deuxième type de service.

10. Premier équipement utilisateur, UE, comprenant :
un premier module générateur (110), configuré pour dériver une clé racine de service cible d'un service cible dans un deuxième type de service selon un identifiant de clé d'une clé racine de premier service d'un premier type de service et d'un code de service du service cible dans le deuxième type de service ;
dans lequel le premier module générateur (110) est configuré pour :
dériver la clé racine de service cible du service cible dans le deuxième type de service, selon l'identifiant de clé, d'une longueur de l'identifiant de clé, du code de service et d'une longueur du code de service.

11. Premier UE selon la revendication 10, comprenant en outre :
un deuxième module générateur (120), configuré pour dériver une clé de session du service cible dans le deuxième type de service selon la clé racine de service cible du service cible dans le deuxième type de service.

12. Premier UE selon la revendication 11, dans lequel le deuxième module générateur (120) est configuré pour :
dériver une clé intermédiaire selon la clé racine de service cible du service cible dans le deuxième type de service ; et
dériver la clé de session du service cible dans le deuxième type de service selon la clé intermédiaire.

13. Premier UE selon la revendication 12, dans lequel le deuxième module générateur (120) est configuré pour :
générer un premier nombre aléatoire ;
recevoir un deuxième nombre aléatoire généré par un deuxième UE ; et
dériver la clé intermédiaire sur la base du premier nombre aléatoire, du deuxième nombre aléatoire et de la clé racine de service cible du service cible dans le deuxième type de service.

14. Support de stockage lisible par ordinateur, stockant un programme exécutable qui, lorsqu'il est exécuté par un processeur d'un premier équipement utilisateur, UE, amène le premier UE à mettre en œuvre le procédé selon l'une quelconque des revendications 1 à 9.
